# EUROPEAN PATENT SPECIFICATION

(11) **EP 3 021 676 B1**
(45) Date of publication and mention of the grant of the patent: **10.10.2018**
(21) Application number: 14826508.5
(22) Date of filing: 18.07.2014
(51) Int. Cl.: A23B 7/02, A23B 7/024, A23L 3/01

(54) **METHOD FOR ACCELERATING THE FREEZE-DRYING OF PRODUCTS USING MICROWAVE ENERGY**
VERFAHREN ZUR BESCHLEUNIGUNG DER GEFRIERTROCKNUNG VON PRODUKTEN MITTELS MIKROWELLENENERGIE
PROCÉDÉ D'ACCÉLÉRATION DE LA LYOPHILISATION DE PRODUITS PAR ÉNERGIE À MICROONDES

(30) Priority: 19.07.2013 US 201361856603 P
(43) Date of publication of application: 25.05.2016
(73) Proprietor: Procesos Naturales Vilkun S.A, 4780000 Temuco (CL)
(72) Inventor: MONCKEBERG, Sebastian, 4780000 Temuco (CL)
(74) Representative: Zacco Sweden AB
(86) International application number: PCT/IB2014/002063
(87) International publication number: WO 2015/008153

(56) References cited:
- CN-B- 101 849 573
- CN-B- 101 849 573
- CN-C- 100 396 195
- US-A- 4 002 772
- US-A- 4 341 803
- US-A1- 2007 031 553
- US-A1- 2007 160 729
- US-A1- 2011 091 620
- US-A1- 2011 091 620

## Description

### BACKGROUND

### 1. Field

The present disclosure relates generally to freeze-drying, and more specifically to a method for accelerating freeze-drying of produce using microwave energy.

### 2. Description of Related Art

Freeze-drying is a process that removes nearly all of the moisture from a substance for the purpose of preserving it. Freeze-drying (also called lyophilization) is accomplished by freezing the substance, reducing its pressure, and adding heat such that the frozen water within the substance turns to gas via sublimation. Freeze-drying is used to preserve a variety of products, including produce (such as fruits and vegetables) and pharmaceuticals (such as vaccines).

There are several disadvantages associated with conventional freeze-drying. At the low pressures required for sublimation, it is relatively ineffective to heat the product using convection heating, since there are relatively few gas molecules surrounding the product with which to heat it. For this reason, conventional freeze-drying processes often use conduction energy, in which the product is typically placed in contact with a heated surface. Conduction energy heats the exterior of the product and relies on conductive heat transfer to heat the interior of the product.

One challenge with this approach is that, as the contact surface dries, it becomes more of an insulator, thus increasingly inhibiting heat transfer to the interior of the product. If the contact or heated surface becomes too hot before the interior has completely sublimated, the product may be damaged. Thus, the amount of conductive heat supplied during the freeze-drying process must be carefully regulated. As a result of this constraint, conventional freeze-drying processes may require significant periods of time. For example, the typical duration for conventional freeze drying of fruits or vegetables is in the range of 8-40 hours, depending on the geometry, type, and quantity of produce to be dried. This process cannot be sped up simply by increasing the amount of heat, since overheating the exterior of the produce may cause damage.

Freeze-drying whole produce such as strawberries, raspberries, and blueberries poses additional challenges. During freeze-drying, temperatures of up to 60 °C may occur in areas of the produce that have completed sublimation. When the duration of drying is long, as in conventional freeze drying, some or all of the produce may be exposed to these elevated temperatures for hours. This issue may be particularly problematic for whole produce or for large segments of produce such as apples, because these types of produce take longer to dry and are sensitive to heat. Excessive heating in the drying stage causes the volatiles, such as flavors, vitamins, and antioxidants, to be destroyed. The final produce may still provide excellent texture and good rehydration properties, but may have lost vitamins, antioxidants, and flavors.

In recent years microwave energy has been proposed for use in accelerating the freeze-drying process. Unlike heat supplied by conduction, microwave energy penetrates a substance's external layers to warm the interior and increase the rate of sublimation. In this manner, microwave energy can potentially reduce the time and energy required for freeze-drying. However, the use of microwaves at the temperatures and pressures required for freeze-drying presents several challenges, including the potential for produce damage due to thermal runaway. These effects may be minimized by using low microwave powers, at the cost of longer drying times. Similarly, the use of higher microwave powers during freeze-drying under certain environmental conditions may result in the discharge and ignition of nonthermal (*i.e.,* cold) plasma, resulting in burned or otherwise damaged product.

What is needed is a microwave freeze-drying method that permits high microwave powers to be applied during freeze-drying of produce without damaging the produce, thus enabling shorter freeze-drying times.

CN101849573 describes a microwave freeze-drying and dehydrating method of fruits and vegetables. The method comprises the application of microwaves of different power levels, wherein changes in power level are based on time.

US2011091620 describes an apparatus and method for the perforation of the skins or hulls of food pieces to more efficiently produce a dried, shelf-stable product.

US4002772 discloses a pressure freezing treatment rendering cellular food materials relatively soft in texture and more permeable and porous.

### BRIEF SUMMARY

A method for using microwave energy to accelerate freeze-drying of produce having a skin that involves freezing the produce, rupturing the skin of the produce, reducing the pressure of the ruptured and frozen produce to a pressure that facilitates sublimation, applying a first microwave power to the produce to achieve an initial microwave power density of at least 30 W/kg, and applying a second microwave power to the produce when the produce temperature exceeds a threshold value, wherein the second microwave power is less than the first microwave power.

### DESCRIPTION OF THE FIGURES

FIG. 1 depicts an exemplary method for microwave freeze-drying produce having a skin.
FIG. 2 depicts a first and second power applied to blueberries during microwave freeze-drying, and the associated initial power density.

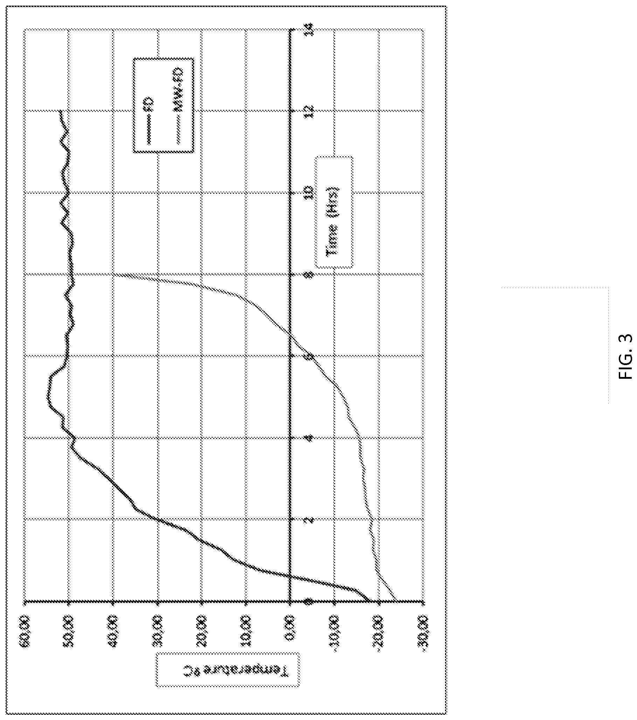

FIG. 3 depicts exemplary produce temperatures for produce freeze-dried using conventional freeze-drying and microwave freeze-drying.
FIG. 4 is a schematic of an exemplary cut pattern for a blueberry.
FIG. 5 depicts breakdown voltage versus pressure.
FIG. 6 depicts microwave freeze-dried blueberries having a Hedonic Scale value of 2.
FIG. 7 depicts microwave freeze-dried blueberries having a Hedonic Scale value of 3.
FIG. 8 depicts a microwave freeze-dried blueberry having a Hedonic Scale value of 5.0.

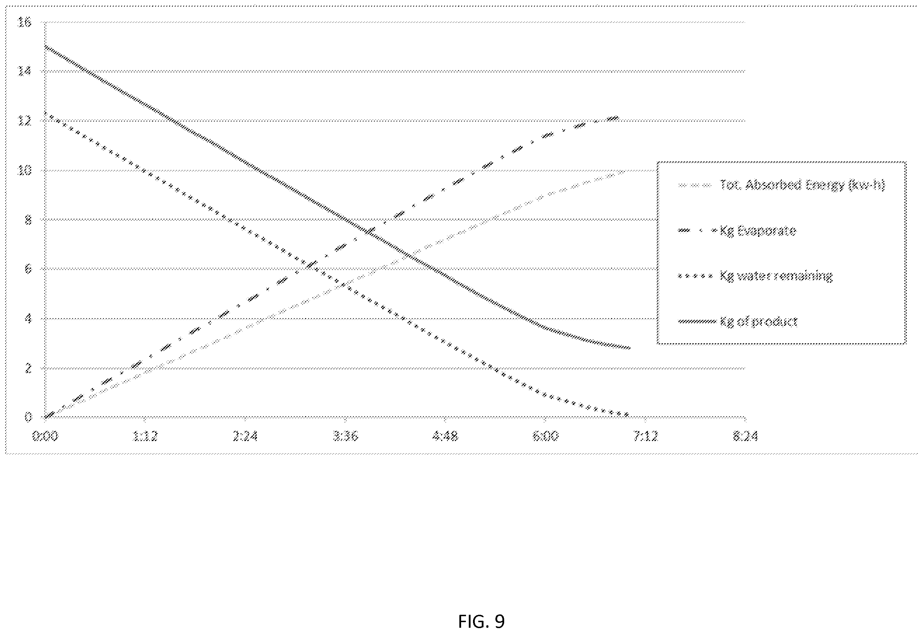

FIG. 9 depicts an exemplary change in total applied energy and mass as a product is microwave freeze-dried. FIG. 9 also depicts remaining and evaporated water.

### DETAILED DESCRIPTION

The invention is defined by the claims. The following description sets forth exemplary methods, parameters, and the like. It should be recognized, however, that such description is not intended as a limitation on the scope of the present disclosure but is instead provided as a description of exemplary embodiments.

This disclosure describes processes for freeze-drying produce using microwave energy. In contrast to freeze-drying processes that require lengthy drying periods for whole produce or large segments of produce, the processes described herein allow significantly faster drying times by pre-processing the produce to improve thermal absorption capacity and reduce the potential for internal pressure build-up, then applying relatively high microwave power to the produce under the pressure and temperature conditions suitable for sublimation. The pre-processing results in a reduced likelihood of produce damage due to thermal runaway or other effects (*e.g*., plasma discharge or cold plasma ignition) associated with using high microwave power to heat produce under the typical temperature and pressure conditions required for freeze-drying.

### 3. Freeze-drying produce having a skin

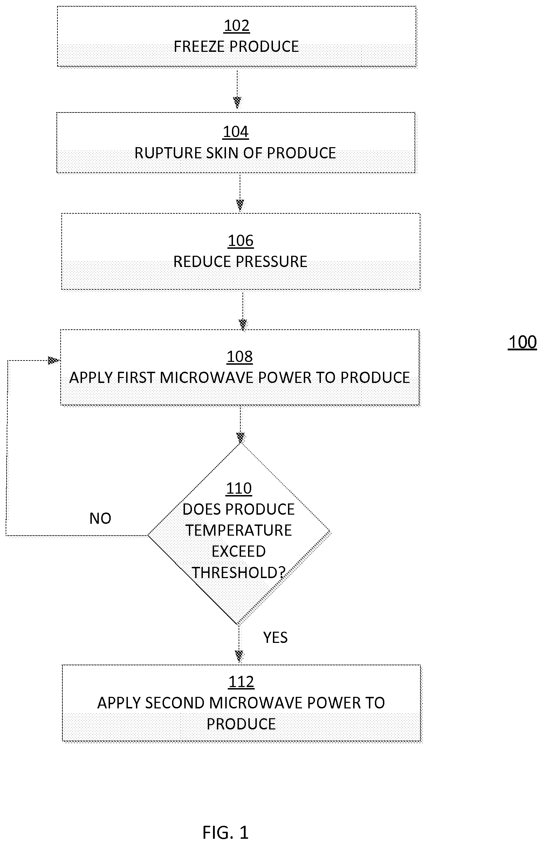

FIG. 1 depicts an exemplary process 100 for microwave freeze-drying produce that has a skin. This process is described in detail below.

### a. Freeze Produce

In block 102, the produce may be frozen. In one exemplary process, the produce is frozen to a temperature of -20 °C. In alternative processes, the produce may be frozen to a temperature of -5 °C, -15 °C, or -35 °C, for example. In some examples, the produce freezing temperature may be selected based on the sugar content of the produce.

In some examples, the freezing temperature may affect the quality and speed of the freeze-drying process. For example, lower temperatures may increase the penetration depth of the microwaves, thus enabling the microwave energy to penetrate deep into the bulk of vegetables and fruits. In this case, sublimation may occur throughout the complete volume of produce.

### b. Rupture skin of produce

In block 104, the skin of the frozen produce is ruptured. Rupturing may include piercing, perforating, cutting, scoring, cross-hatching, slicing, chemical treatments that remove or loosen the skin, or sanding, for example. The rupturing process may be performed in any manner that improves vapor permeability or keeps the internal pressure of the produce lower during the freeze-drying process. Preferably, the rupturing process leaves the produce essentially intact, in a single piece; however, for some markets it may be acceptable to rupture the skin in a manner that that does not leave the produce essentially intact. For example, for segments of larger fruits, such as apples, the produce may not be intact but the segments may be thicker than the thin slices traditionally used for freeze-drying.

Rupturing may be done by hand, using automated machinery, or by bathing the produce in an appropriate chemical solution, for example. In alternative processes, rupturing the skin may occur before the product is frozen; for example, some chemical processes used to remove a portion of the skin are more readily performed prior to freezing the product.

Whole produce having intact skin with low vapor permeability (such as grapes, black or red currants, or blueberries) tends to experience relatively high internal pressures during microwave freeze-drying as the ice sublimates. The vapor cannot readily escape the produce to enable continued drying, because the skin inhibits both thermal and mass transfer. If left unprocessed before freeze-drying, the microwave power applied to the produce must be kept relatively low to avoid damage due to thermal runaway or other effects associated with the specific manner in which microwave energy generates heat, as described below.

Microwaves generate heat by exciting water molecules, causing them to vibrate. The water molecules then transmit their kinetic energy (heat) to surrounding molecules. This process is referred to as dielectric heating. However, microwave energy is much less efficient for heating ice than for heating water since ice molecules are not as free to vibrate as water molecules. Thus, microwaves are relatively less likely to be absorbed on frozen produce.

The rate of heating for a substance depends on how well it is able to absorb energy, which in turn depends on its dielectric constant and loss factor. These parameters are affected by the temperature of the produce. Typically, warmer areas of the produce absorb more energy, thus becoming warmer, faster. Furthermore, the loss factor may change significantly with the phase change from solid to liquid (ice to water), at which point the energy absorption may significantly increase. This phase change may occur as a result of high internal pressures that push the produce past the triple point and allow the solid to turn to liquid rather than sublimating. The liquid portions may then absorb more energy than the solid portions, and heat up very quickly. If the produce is unable to dissipate this heat quickly enough, this effect can lead to "thermal runaway." Thermal runaway may result in very high temperatures within the produce, which can cause significant damage to texture, appearance, nutrients, or other properties.

In microwave freeze-drying, thermal runaway may occur if some of the ice turns to liquid rather than sublimating, and subsequently heats up much more quickly than the remaining ice. This effect increases with increasing microwave power. For produce having intact skin, the likelihood of thermal runaway can be reduced by rupturing the skin prior to microwave freeze-drying, thus allowing the vapor generated by sublimation inside the produce to more easily escape. By rupturing the skin of the produce, the internal pressure and the equilibrium temperature (typically -10° to -30°C, *e.g.,* -20°C) of the produce can be kept lower throughout the majority of the freeze-drying process, thus enabling higher microwave powers that are homogenously distributed and faster drying times while potentially maintaining produce quality and appearance.

In some cases, the effects of rupturing the skin may be enhanced if the rupturing method exposes a portion of the interior surface area of the produce, as would be the case if the produce is cut to a depth below the skin. For example, as will be discussed in more detail later, rupturing the skin of a blueberry by cutting through the blueberry at an initial distance of 2.5 mm from the edge of the berry may enable the use of higher microwave powers by exposing a portion of the blueberries' interior surface area. However, this approach may trade off the ability to increase microwave power against the final produce appearance. If the produce has many cuts or is cut very deeply, for example, it may be rated as having a lower appearance score on produce appearance scales such as Hedonic Scales. In blueberries, for example, a ratio of the surface area exposed by cutting to the total volume of less than about 0.12 mm²/mm³ may enable higher powers while maintaining a good appearance.

In some cases, if the produce has an internal cavity, the skin of the produce may be ruptured in a manner that exposes the internal cavity. Produce with an internal cavity may include, for example, strawberries, which have a hollow core. Internal cavities may increase the likelihood of damage to the produce during microwaving due to the antenna effect and plasma discharge. By rupturing the produce to expose the internal cavity prior to microwaving, the internal pressure of the produce is kept lower during the freeze-drying process, and the likelihood of the antenna effect is reduced. In this case, the produce may be ruptured in any manner that exposes the internal cavity; the specific approach will vary depending on the type of produce and the desired characteristics of the final freeze-dried produce, including whether it should be freeze-dried essentially intact or in multiple pieces.

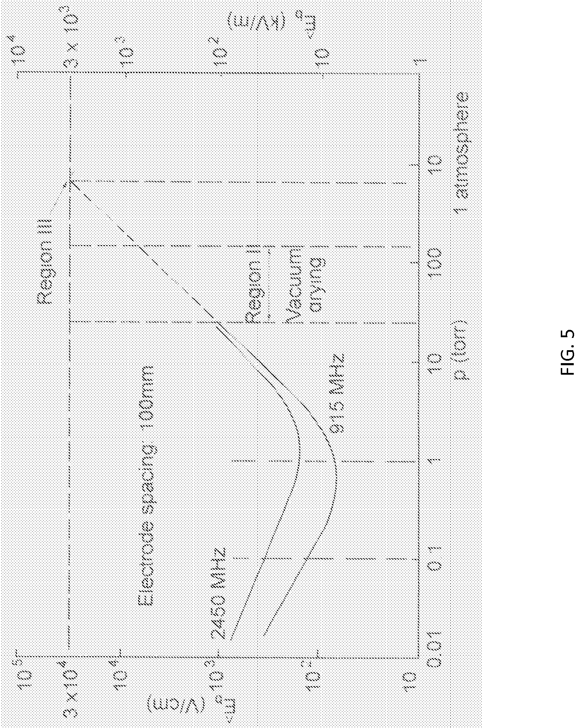

In microwave ovens, the antenna effect refers to a scenario in which the breakdown voltage of the air in the chamber is exceeded by the microwave energy, causing the air to ionize and allow plasma discharge. This may occur due to imperfections in the chamber that concentrate the microwave energy in specific areas, or due to characteristics of the produce being microwaved. The antenna effect is more likely to occur when microwave energy is used at the low pressures typical of freeze-drying, since, as depicted in FIG. 5, the breakdown voltage is lower at these pressures. Plasma discharge can cause significant damage to the produce in the microwave.

### c. Reduce ambient pressure to permit sublimation

In block 106, the ambient pressure surrounding the produce is reduced to a pressure that permits sublimation. The ambient pressure may be reduced by placing the produce in a vacuum chamber and reducing the pressure in the vacuum chamber. In one exemplary process, in block 106 the pressure is reduced to 1 mbar. In alternative processes, the pressure may be reduced to 0.5 mbar, 0.1 mbar, 0.05 mbar, or 0.03 mbar. In some cases it may be desirable to lower the pressure below the minimum pressure necessary to achieve sublimation. Lower pressures may result in a lower likelihood of thermal runaway, and may avoid the minimum breakdown voltage regions depicted in FIG. 5.

The vacuum chamber used to reduce the ambient pressure may provide some mechanism for tumbling the produce during sublimation--such as a rotatable drum, a turntable, or stirrers, for example--to ensure more uniform temperature distributions and reduce the likelihood of produce damage due to overheating.

### d. Apply first microwave power to produce

In block 108, a first microwave power is applied to the produce in the vacuum chamber. Application of the first microwave power to a given mass of produce results in an initial microwave power density; that is, an initial power (*e.g.,* watts) per unit mass (*e.g.,* kilograms). As the freeze-drying process progresses, the mass of the produce will decrease (as the ice sublimates), and the power density will change if the power is held constant.

The first microwave power encourages sublimation by generating heat within the produce. According to the method of the invention, at block 108 an initial microwave power density of 30W/kg is achieved, which is sufficiently high to enable rapid sublimation of the water within the produce. In alternative embodiments, the first microwave power density achieved may be 50W/kg, 60 W/kg, 90W/kg, 120W/kg, 150W/kg, 180W/kg, 210W/kg, or 600W/kg. The likelihood of produce damage due to the relatively high power density is mitigated by the pre-processing of block 104. In some examples, the first microwave power may be used for the majority of the freeze-drying process.

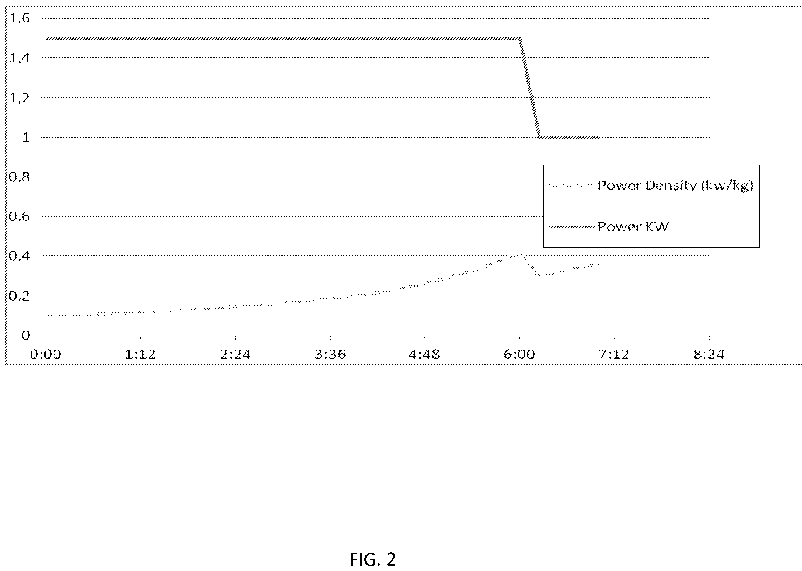

In some examples, the first microwave power may be determined by determining the highest power density that may be applied to the produce during the initial freeze-drying before generating hot-spots. The power used to achieve this maximum power density may then be selected as the first microwave power in block 108. FIG. 2 depicts exemplary microwave powers applied to blueberries during microwave freeze-drying, along with the associated microwave power density. The microwave power density changes as the produce loses mass during the freeze-drying process.

### e. Determine whether produce temperature exceeds threshold

Returning to FIG. 1, in block 110, it is determined whether some or all of the produce has reached a temperature that exceeds a threshold temperature. After most of the ice has sublimated during block 108, the produce is more susceptible to heat damage. At this point, the relatively high microwave power applied in block 108 may be reduced for the remainder of the freeze-drying process to avoid produce damage. The point at which the power may be reduced can be determined by, for example, monitoring the temperature of the produce, and reducing the power when the temperature exceeds a threshold. The temperature may be monitored at multiple locations to identify localized hot spots.

In one exemplary process, at block 110 the threshold temperature is 40 °C. In alternative processes the threshold temperature may be 60 °C, 40 °C, 30 °C, 25 °C, 15 °C, 0 °C, -10 °C, or -25 °C, for example. In some examples, the threshold temperature may depend on the equilibrium temperature of the produce. For example, early in the freeze-drying process, the equilibrium temperature is (for example) -30 °C. At this point, a localized temperature of -20 °C may indicate a high risk of thermal runaway. Later in the freeze-drying process, as the equilibrium temperature rises, a localized temperature of -20 °C may not be of concern. Thus, in some examples, the threshold temperature may be defined in terms of a difference from the equilibrium temperature of the produce, or as a constant value, or computed in some other manner.

The threshold temperature may be selected based on the characteristics of the produce, the current time in the overall processing time, the desired freeze-drying duration, or the desired quality of the final freeze-dried produce. The temperature may be monitored using an infrared camera, for example, which is compatible with the use of microwaves.

### f. Apply second microwave power to produce

In block 112, a second microwave power is applied to the produce. When the some or all of the produce reaches a temperature that is at or above the threshold value, a second power may be applied to the produce, where the second microwave power is lower than the first microwave power. The second microwave power may be low enough that the produce does not become overheated during the end stages of freeze-drying, when the moisture content is very low. In one exemplary process, at block 112 the second microwave power is 65% of the first microwave power. In alternative processes, the second microwave power may be 75% of the first microwave power, 50 % of the first microwave power, or 35% of the first microwave power. Alternatively, the application of power may be stopped for a period of time to allow for equalization of heat within the produce. In some embodiments, the application of power is stopped for a few seconds (*e.g.,* 5, 10, 15, 20, or 30 seconds). In other embodiments, the application of power is stopped for a few minutes (*e.g*., 1, 2, 3, 4, or 5 minutes).

### 4. Time required for microwave freeze-drying

As previously discussed, the time required to microwave freeze-dry produce depends on the power applied to the produce; higher powers enable faster drying times. For example, blueberries that are microwave freeze-dried without pre-processing may require approximately 30 hours, with an initial power density of approximately 8W/kg. By rupturing the skin of the blueberries to allow an initial microwave power density of 100W/kg (or higher, e.g., 350W/kg) for the majority of the drying process. For example, the treated blueberries may be microwave freeze-dried without damage and with an excellent final appearance in approximately 4-8 hours.

### 5. Tumbling or moving the produce during processing

In some embodiments, the produce may tumbled or otherwise moved during processing. Generally, tumbling allows for equalization of the energy in the produce during processing, on a bulk level. Depending on certain environmental conditions (*e.g*., the geometries of the processing chamber, shape of the produce, composition of the produce) and the amount of microwave power, the antenna effect discussed above may occur, resulting in plasma discharge (*e.g.,* cold plasma ignition). It has been observed that plasma discharge generally occurs at lower microwave power levels in produce that is being actively tumbled than in produce that is held still.

In some embodiments, the produce is tumbled or moved intermittently (or at varying levels), in conjunction with the application of varying microwave power densities, in order to limit or eliminate undesired cold plasma ignition effects. In one embodiment, the produce is alternatively held still for a first period of time ("X") and then tumbled for a second period of time ("Y"). Microwave power density is applied at a higher, first level ("N") while the produce is held still (period "X"), and then applied at a lower, second level ("M") of microwave power density when the produce is tumbled (period "Y"). In some embodiments, power density ("N") during the first period of time ("X") may be 20%, 30%, 40%, 50%, 60%, 70%, or 80% greater than power density ("M") during the second period of time ("Y").

### 6. Experimental Results: Whole Blueberries

Whole blueberries were processed using one of the four different techniques described below to rupture the skin, then microwave freeze-dried. In alternative processes, the skin of produce may be ruptured using more than one technique.

### a. Rupturing techniques

Technique 1: Bathing the blueberries in a 5% solution of caustic soda at 30 °C to loosen the skin from the produce, then washing and vacuuming the berries to remove the skin. This rupturing technique was performed prior to freezing the blueberries.

Technique 2: Using a needle to perforate the skin four times per blueberry. This method was performed by hand after the blueberries were frozen.

Technique 3: Sanding the skin of blueberries by placing them in a sanding tumbler at 15 RPM. This technique was performed after the blueberries were frozen.

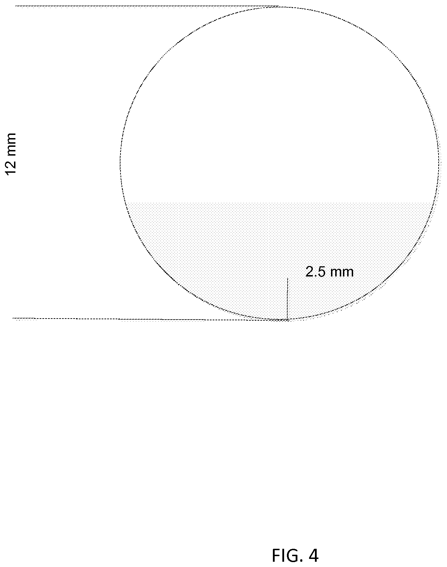

Technique 4: Cutting through the blueberries at an initial distance of 2.5 mm from the edge of the blueberries, as shown in FIG. 4. This process was performed by hand using a fixed 3mm blade after the blueberries were frozen. In this test, the blueberries' diameter was approximately 12 mm. Each blueberry was cut once. Because the cut penetrated into the interior of the blueberry, this rupturing technique exposed some of the blueberry's interior surface area.

### b. Freeze-drying parameters

After the whole blueberries were frozen and their skin was ruptured using one of the methods described above, 12 kg of whole blueberries were placed in a tumbling vacuum chamber rotating at 0.3 to 1 RPM. The pressure was reduced to 0.2 mbar, and a first microwave power was applied. The first microwave power was determined using a power density test such as described above with respect to FIG. 1.

The temperature of the blueberries was monitored in three locations in the chamber to determine when the blueberries developed hot spots indicative of a likelihood of thermal runaway, and the power was reduced to a second microwave power when a hotspot was detected. This second power was used for the remainder of the freeze-drying process. Once the drying process was complete, the freeze-dried berries were removed from the drum and evaluated using a Hedonic Scale.

### c. Evaluation using Hedonic Scale

The freeze-dried blueberries were rated on a Hedonic Scale to evaluate their appearance. Hedonic Scales are commonly used to evaluate the visual appeal of produce and other products. The five-point Hedonic Scale used to evaluate the freeze-dried blueberries is shown below.
1: Unacceptable: the produce may appear burned, for example.
2: Poor: Clusters of multiple fruits may be stuck together with fruit sugars, or portions of the skin may be lost. There may be other significant imperfections in appearance.
3: Acceptable: There may be recognizable fruit shrinkage, or other moderate imperfections in appearance.
4: Good: The produce generally retains its shape, but may have wrinkles or other mild imperfections.
5: Excellent: The produce retains its shape, color, aroma, and other quality characteristics. It is visually appealing and has few (if any) imperfections.

Produce that is rated below a 4 on the Hedonic Scale is typically unsuitable for the high-quality snacking industry. The produce may still retain acceptable flavor and texture, but its appearance may be unacceptable for some consumers.

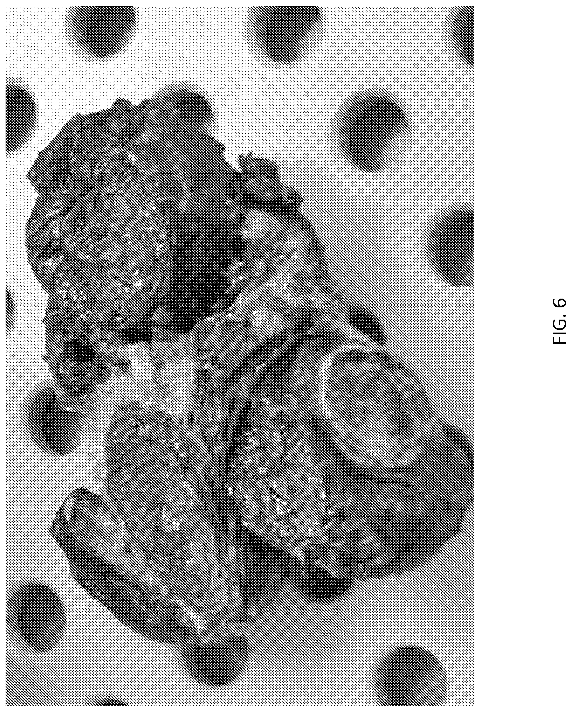

For example, FIG. 6 depicts freeze-dried blueberries that have been rated as a 2 on the Hedonic Scale. These blueberries are clustered and stuck together with fruit sugars. Such a clustering effect may occur when the internal pressure of the fruit rises above the triple-point pressure during the sublimation process. Some of the frozen solution liquefies rather than sublimating, and the fruit subsequently bleeds a boiling sugar solution.

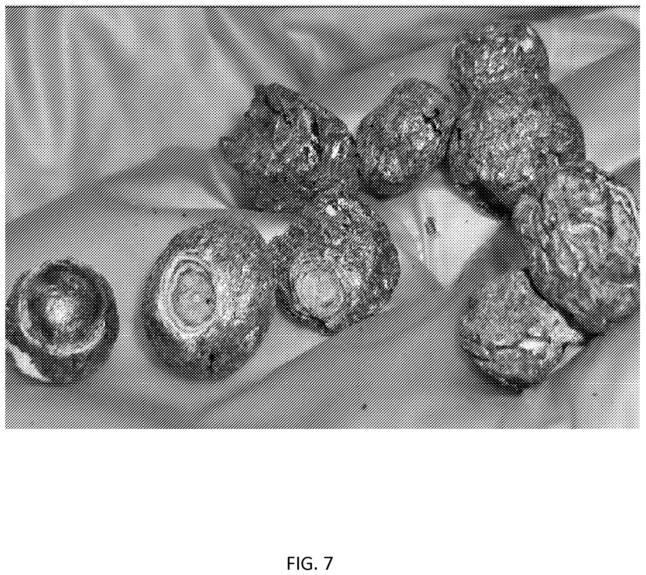

FIG. 7 depicts freeze-dried blueberries that have been rated as a 3 on the Hedonic Scale. These blueberries show recognizable fruit shrinkage, which may be caused by capillary forces associated with some of the ice turning to liquid.

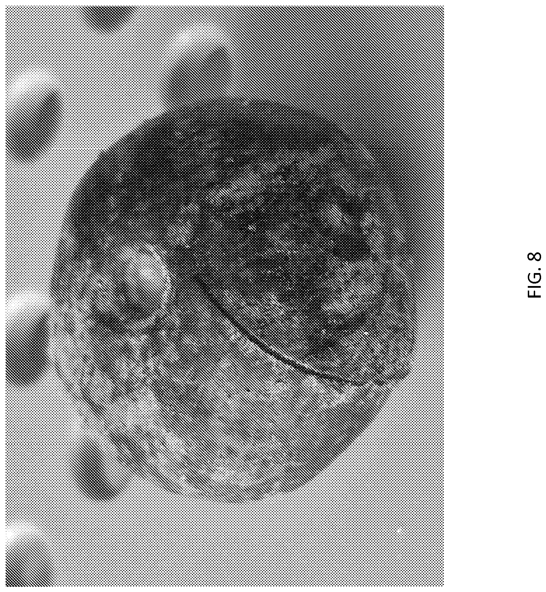

FIG. 8 depicts a microwave freeze-dried blueberry that has been rated as a 5 on the Hedonic Scale. This blueberry has been cut once as described with respect to FIG. 4.

### d. Results

The results of the blueberry test cases described above are shown in Table 1 below for 12kg of blueberries. The Hedonic Scale score is reported as an average of scores reported by multiple evaluators.

**Table 1**

| Technique of rupturing skin | Power kW | Max power density applied without damage W/kg | Hedonic Scale Score 1-5 (5 is best) |
|---|---|---|---|
| None | 0.1 | 8.3 | 4.5 |
| Chemical | 0.8 | 66.7 | 2.0 |
| Needle | 0.3 | 33.3 | 4.5 |
| Sanded | 0.3 | 33.3 | 4.0 |
| Single Cut | 1.2 | 100 | 4.5 |

As shown in Table 1, the maximum power density that could be applied to whole blueberries having intact skins was 8.3 W/kg; the blueberries developed hot spots at power densities that exceeded this value. Using the associated power of 0.1 kW, whole untreated blueberries would require approximately 30 hours to freeze-dry. The appearance of such freeze-dried blueberries was rated at 4.5.

The use of chemical pre-processing to remove the skin enabled much higher microwave power density of 66.7 W/kg (and a higher power of 0.8 kW) without developing hot spots, but the resulting appearance of the blueberries was rated at 2.0, which is poor. These blueberries had white pulp on the ends of the fruit. Such blueberries may be acceptable for certain markets, but are unlikely to be acceptable in the high-quality snacking industry.

Perforating the blueberries with a needle provided maximum power density results that were similar to those obtained by sanding the blueberries, though the needled blueberries scored somewhat higher (4.5 compared to 4) on the Hedonic Scale. The maximum power density applied without developing hot spots was approximately double the power density that could be applied to unprocessed whole blueberries. Thus, sanding or perforating the blueberries may enable them to be microwave freeze-dried in less time than unprocessed blueberries while maintaining acceptable appearance.

The best result for blueberries was obtained by cutting the blueberries as described previously. This technique of rupturing the skin enabled a microwave power density of 100 W/kg (and associated power of 1.2 kW) and provided a very good appearance score. FIG. 8 depicts a blueberry that was microwave freeze-dried after its skin was ruptured in a single cut, as previously described. This blueberry has been rated as 5.0 on the Hedonic Scale, a score that is likely to be acceptable for the high-quality snacking industry.

### 7. Effect of multiple cuts

Additional tests were conducted to determine the effect of using multiple cuts on the maximum microwave power and appearance.

**Table 2**

| # of cuts | Exposed area /total volume (mm²/mm³) | Power kW | Max power density applied without damage W/kg | Product Appearance 1-5 |
|---|---|---|---|---|
| 1 | 0.027 | 1.2 | 100 | 4.5 |
| 2 | 0.074 | 1.8 | 150 | 4.0 |
| 3 | 0.111 | 2.1 | 175 | 3.0 |
| Halved | 0.131 | 2.8 | 183 | 2.0 |

The skins of whole frozen blueberries were ruptured using one, two, or three cuts, where each cut was performed as shown in FIG. 4. Each of these cuts exposed additional surface area of the blueberry, and enabled the blueberry to be freeze-dried using higher microwave power density. Some of the blueberries were cut in half, for comparison. As shown above, the maximum microwave power density was correlated with the number of cuts and the ratio of the surface area exposed by the cuts to the total volume.

Table 2 depicts the number of cuts used, the resulting ratio of surface area exposed by cutting to total volume, the power density that was applied without damaging the blueberries, and the resulting appearance score. As shown in Table 2, performing additional cuts to expose more surface area enables higher microwave power densities without damage, but results in less attractive freeze-dried blueberries. Keeping the ratio of exposed surface area of each individual piece to the total volume of each individual piece below about 0.12 mm²/mm³ yielded better appearance scores.

Cutting the blueberries in half allowed the highest power density but yielded the worst appearance score of 2.0. Even without burning or other visible damage, halved blueberries are considered relatively unappealing because they reveal the internal portions of the freeze-dried fruit, which may be white. Thus, halved fruits may not be acceptable for the high-quality snacking industry.

As shown in Table 2, it is possible to trade off the number of cuts (and corresponding microwave power density and power) against the desired appearance of the resulting freeze-dried produce.

A person having skill in the art will recognize that, although Table 3 depicts results for blueberries, similar trade-offs can be made for other produce based on varying the ratio of exposed surface area to total volume.

As a further test, the effect of pre-processing the blueberries using the techniques described above was also assessed by applying a power of 1.2 kW to sublimate 20% of the water.

**Table 3**

| Technique of rupturing skin | Power kW | Power density W/kg | Appearance 1-5 (5 is best) |
|---|---|---|---|
| None | 1.2 | 100 | 2 |
| Chemical | 1.2 | 100 | 2.5 |
| Needle | 1.2 | 100 | 2 |
| Sanded | 1.2 | 100 | 2 |
| Single Cut | 1.2 | 100 | 4.5 |

As shown in Table 3, the blueberries that were not pre-processed had a very poor appearance score after freeze-drying at 1.2 kW, as did the blueberries with skins ruptured by chemical process, needling, and sanding. Such blueberries would have an appearance similar to the berries shown in FIG. 6.

Cutting the blueberries using a single cut shown in the schematic in FIG. 4, however, allowed the blueberries to tolerate the high power while providing a good appearance score. Such blueberries would have an appearance similar to the berry depicted in FIG. 8.

The above test cases demonstrate that cutting the blueberries prior to sublimation enables higher microwave powers than the other pre-processing techniques described above, while maintaining an appearance score that is suitable for the high-quality snacking industry. A person of skill in the art will recognize that the pre-processing technique to be used will depend on the type of fruit, the target market, the desired appearance, and other factors.

### 8. Experimental Results: Whole Strawberries

Table 4 provides the drying parameters and drying time for whole strawberries that were microwave freeze-dried. In this example, the strawberries were frozen and the skin was perforated prior to sublimation.

**Table 4**

| Microwave Freeze-Dried Whole Strawberries with Perforated Skins | |
|---|---|
| Initial weight | 3 kg |
| End weight | 0.51 kg |
| Drying time | 3.0 hours |
| Maximum temperature | 42 °C |
| Applied microwave energy | 2.81 kWh |

### 9. Experimental Results: Cut Apple Segments

Table 5 provides tumbling speeds and microwave power settings for cut apple segments that were microwave freeze-dried, with differential power application in conjunction with intermittent tumbling.

**Table 5**

| | **1^{st} Tumbling Period** | **1^{st} Still Period** | **2^{nd} Tumbling Period** | **2^{nd} Still Period** |
|---|---|---|---|---|
| **Tumbling Speed (RPM)** | 0.3 | 0 | 0.3 | 0 |
| **Power Applied (KW)** | 0.5 | 0.8 | 0.5 | 0.8 |

The above test protocol allowed for a greater, average microwave power density and energy distribution in the bulk produce via tumbling, while avoiding or limiting cold plasma ignition effects.

The previous descriptions are presented to enable a person of ordinary skill in the art to make and use the various embodiments. Descriptions of specific devices, techniques, and applications are provided only as examples. Various modifications to the examples described herein will be readily apparent to those of ordinary skill in the art.

## Claims

1. A method for using microwave power to accelerate freeze-drying of produce having a skin, the method comprising:
freezing the produce;
rupturing the skin of the produce;
reducing the ambient pressure around the ruptured and frozen produce to a pressure that permits sublimation;
applying a first microwave power to the produce to achieve an initial microwave power density of at least 30 W/kg; and
applying a second microwave power to the produce when the produce temperature exceeds a threshold value, wherein the second microwave power is less than the first microwave power.

2. The method of claim 1, wherein the produce with ruptured skin is essentially intact.

3. The method of any preceding claim, wherein the skin is ruptured before the produce is frozen.

4. The method of any preceding claim, wherein the pressure is reduced to a pressure below 0.6 mbar.

5. The method of any preceding claim, wherein the pressure is reduced to a pressure below 0.05 mbar.

6. The method of any preceding claim, wherein the produce is frozen to a temperature that is not greater than -20 C.

7. The method of any preceding claim, wherein the skin of the produce is ruptured by cutting.

8. The method of any preceding claim, wherein the skin is cut in a manner such that the ratio of the exposed surface area exposed by cutting of the produce to the total volume of the produce is less than 0.12 mm²/mm³.

9. The method of any preceding claim, wherein the skin of the produce is ruptured by multiple cuts.

10. The method of any preceding claim, wherein the skin of the produce is ruptured in a manner that exposes an inner cavity of the produce.

11. The method of any preceding claim, wherein the skin is ruptured using a chemical process.

12. The method of any preceding claim, wherein the skin is ruptured by perforation.

13. The method of any preceding claim, wherein the skin is ruptured by sanding.

14. The method of any preceding claim, wherein the produce is tumbled during at least a portion of the sublimation.

15. The method of claim 14, wherein the produce is tumbled for at least a first period of time and held still for at least a second period of time.

16. The method of claim 15, wherein microwave power is applied at a lower level during the second period of time than the first period of time.

17. The method of claim 16, wherein the microwave power applied during the first period of time is at least 20% greater than the microwave power applied during the second period of time.

18. The method of claim 15, wherein the second period of time occurs before the first period of time.

## Patentansprüche

1. Verfahren zur Verwendung von Mikrowellenleistung zum Beschleunigen von Gefriertrocknung eines eine Haut aufweisenden Produkts, welches Verfahren umfasst:
Gefrieren des Produkts;
Zerreißen der Haut des Produkts;
Reduzieren des Umgebungsdrucks um das zerrissene und gefrorene Produkt auf einen Druck, der Sublimation erlaubt;
Anlegen einer ersten Mikrowellenleistung auf das Produkt, um eine anfängliche Mikrowellenleistungsdichte von mindestens 30 W/kg zu erzielen; und
Anlegen einer zweiten Mikrowellenleistung auf das Produkt, wenn die Produkttemperatur einen Schwellenwert überschreitet, wobei die zweite Mikrowellenleistung geringer als die erste Mikrowellenleistung ist.

2. Verfahren nach Anspruch 1, wobei das Produkt mit zerrissener Haut im Wesentlichen unversehrt ist.

3. Verfahren nach einem der vorgehenden Ansprüche, wobei die Haut vor dem Gefrieren des Produkts zerrissen wird.

4. Verfahren nach einem der vorgehenden Ansprüche, wobei der Druck auf einen Druck unter 0,6 mbar reduziert wird.

5. Verfahren nach einem der vorgehenden Ansprüche, wobei der Druck auf einen Druck unter 0,05 mbar reduziert wird.

6. Verfahren nach einem der vorgehenden Ansprüche, wobei das Produkt auf eine Temperatur von nicht mehr als -20 C. gefroren wird

7. Verfahren nach einem der vorgehenden Ansprüche, wobei die Haut des Produkts durch Schneiden zerrissen wird.

8. Verfahren nach einem der vorgehenden Ansprüche, wobei die Haut derart geschnitten wird, dass das Verhältnis des freiliegenden Oberflächenbereichs, der durch das Schneiden des Produkts freigelegt wird, zum Gesamtvolumen des Produkts weniger als 0,12 mm²/mm³ beträgt.

9. Verfahren nach einem der vorgehenden Ansprüche, wobei die Haut des Produkts durch mehrfache Schneiden zerrissen wird.

10. Verfahren nach einem der vorgehenden Ansprüche, wobei die Haut des Produkts in einer Weise zerrissen wird, die einen inneren Hohlraum des Produkts freilegt.

11. Verfahren nach einem der vorgehenden Ansprüche, wobei die Haut durch die Verwendung eines chemischen Prozesses zerrissen wird.

12. Verfahren nach einem der vorgehenden Ansprüche, wobei die Haut durch Perforation zerrissen wird.

13. Verfahren nach einem der vorgehenden Ansprüche, wobei die Haut durch Schleifen zerrissen wird.

14. Verfahren nach einem der vorgehenden Ansprüche, wobei das Produkt durch zumindest einen Teil der Sublimation getaumelt wird.

15. Verfahren nach Anspruch 14, wobei das Produkt in zumindest einem ersten Zeitraum getaumelt und in zumindest einem zweiten Zeitraum stillgehalten wird.

16. Verfahren nach Anspruch 15, wobei die Mikrowellenleistung auf einem niedrigeren Niveau während des zweiten Zeitraums als des ersten Zeitraums angelegt wird.

17. Verfahren nach Anspruch 16, wobei die während des ersten Zeitraums angelegte Mikrowellenleistung mindestens 20 % größer als die während des zweiten Zeitraums angelegte Mikrowellenleistung ist.

18. Verfahren nach Anspruch 15, wobei der zweite Zeitraum vor dem ersten Zeitraum auftritt.

## Revendications

1. Procédé d'utilisation d'une puissance micro-ondes pour accélérer la lyophilisation d'un produit ayant une peau, le procédé comprenant :
la congélation du produit ;
la rupture de la peau du produit ;
la réduction de la pression ambiante autour du produit rompu et congelé à une pression permettant la sublimation ;
l'application d'une première puissance micro-ondes au produit pour obtenir une densité de puissance micro-ondes initiale d'au moins 30 W/kg ; et
l'application d'une deuxième puissance micro-ondes au produit lorsque la température du produit dépasse une valeur seuil, la deuxième puissance micro-ondes étant inférieure à la première puissance micro-ondes.

2. Procédé selon la revendication 1, dans lequel le produit avec une peau rompue est essentiellement intact.

3. Procédé selon l'une quelconque des revendications précédentes, dans lequel la peau est rompue avant que le produit ne soit congelé.

4. Procédé selon l'une quelconque des revendications précédentes, dans lequel la pression est réduite à une pression inférieure à 0,6 mbar.

5. Procédé selon l'une quelconque des revendications précédentes, dans lequel la pression est réduite à une pression inférieure à 0,05 mbar.

6. Procédé selon l'une quelconque des revendications précédentes, dans lequel le produit est congelé à une température qui n'est pas supérieure à -20 C.

7. Procédé selon l'une quelconque des revendications précédentes, dans lequel la peau du produit est rompue par découpage.

8. Procédé selon l'une quelconque des revendications précédentes, dans lequel la peau est coupée de manière à ce que le rapport de la surface exposée par découpage du produit au volume total du produit soit inférieur à 0,12 mm²/mm³.

9. Procédé selon l'une quelconque des revendications précédentes, dans lequel la peau du produit est rompue par de multiples coupes.

10. Procédé selon l'une quelconque des revendications précédentes, dans lequel la peau du produit est rompue d'une manière qui expose une cavité intérieure du produit.

11. Procédé selon l'une quelconque des revendications précédentes, dans lequel la peau est rompue en utilisant un processus chimique.

12. Procédé selon l'une quelconque des revendications précédentes, dans lequel la peau est rompue par perforation.

13. Procédé selon l'une quelconque des revendications précédentes, dans lequel la peau est rompue par ponçage.

14. Procédé selon l'une quelconque des revendications précédentes, dans lequel le produit est roulé pendant au moins une partie de la sublimation.

15. Procédé selon la revendication 14, dans lequel le produit est roulé pendant au moins une première période de temps et maintenu immobile pendant au moins une deuxième période de temps.

16. Procédé selon la revendication 15, dans lequel la micro-ondes est appliquée à un niveau inférieur pendant la deuxième période de temps par rapport à la deuxième période de temps.

17. Procédé selon la revendication 16, dans lequel la puissance micro-ondes appliquée pendant la première période de temps est supérieure d'au moins 20% à la puissance micro-ondes appliquée pendant la deuxième période de temps.

18. Procédé selon la revendication 15, dans lequel la deuxième période de temps se produit avant la première période de temps.
